# EUROPEAN PATENT APPLICATION

(11) **EP 4 596 433 A1**
(43) Date of publication of application: **06.08.2025**
(21) Application number: 24155813.9
(22) Date of filing: 05.02.2024
(51) Int. Cl.: B65B 55/24, B65G 45/10, B65G 45/22

(54) **FILLING MACHINE AND METHOD FOR FILLING PACKAGE BODIES OPEN ON ONE SIDE WITH PRODUCTS**

(71) Applicant: SIG Services AG, 8212 Neuhausen am Rheinfall (CH)
(72) Inventor: Alicke, Marlena, 52441 Linnich (DE); Barej, Martin, 52441 Linnich (DE); Fleischer, Stefanie, 52441 Linnich (DE); Geissler, Hanno, 52441 Linnich (DE); Hansen, Janina, 52441 Linnich (DE); Langen, Christopher Thiemo, 52441 Linnich (DE); Patzer, Thomas, 52441 Linnich (DE); Ronneberger, Rene, 52441 Linnich (DE); Schmitt, Heiko, 52441 Linnich (DE); Siewert, Knut, 52441 Linnich (DE); Wallentin, Lars, 52441 Linnich (DE); Baltes, Klaus, 50127 Bergheim (DE); Görick, Felix, 41516 Grevenbroich (DE); Hollenbeck, Christoph, 41239 Mönchendgladbach (DE); Mätzkow, Malte, 40223 Düsseldorf (DE); Genc, Muammer, 41189 Mönchengladbach (DE); Rydlewski, Thomas, 40470 Düsseldorf (DE)
(74) Representative: Cohausz & Florack

(57) **Abstract**

Described and shown is a filling machine (20) for filling package bodies (12) open on one side with products, the filling machine (20) having a filling station (35) for filling the package bodies (12) open on one side, a head closure station (37) for closing the head of the filled package bodies (12) open on one side and a transport device (26) for transporting at least the package bodies (12) open on one side at least from the filling station (35) to the head closure station (37) through the filling machine (20), wherein the transport device (26) has at least one pair of conveyor belts (27) for holding the package bodies (12) on opposite side walls and for moving the package bodies (12) in a transport direction (T), wherein the conveyor belts (27) have, between at least two pulleys (44) for deflecting the conveyor belts (27), an at least substantially straight transport section (45) for transporting the package bodies (12) and an at least substantially straight return section (47) for returning the conveyor belts (27) aligned at least substantially parallel to the transport section (45). In order to simplify the method and the design without having to accept functional limitations is provided that a cleaning station (52) for cleaning the conveyor belts (27) with a cleaning fluid is assigned to the transport section (45) and/or the return section (47) of the conveyor belts (27).

## Description

The invention relates to a filling machine for filling package bodies open on one side with products, the filling machine having a filling station for filling the package bodies open on one side, a head closure station for closing the head of the filled package bodies open on one side and a transport device for transporting at least the package bodies open on one side at least from the filling station to the head closure station through the filling machine, wherein the transport device comprises at least one pair of conveyor belts for holding the package bodies against opposite side walls and for moving the package bodies in a transport direction, wherein the conveyor belts comprise between at least two pulleys for deflecting the conveyor belts an at least substantially straight transport section for transporting the package bodies and an at least substantially straight return section aligned at least substantially parallel to the transport section for returning the conveyor belts. Furthermore, the invention relates to a method for filling package bodies open on one side with products using a filling machine.

Filling machines for filling package bodies that are open on one side with products are used in the food and beverage industry, for example. The package bodies, which are open on one side, are formed from a package material in the form of a cardboard composite, for example. In particular, the package material forms a laminate comprising a cardboard layer and outer, in particular thermoplastic, plastic layers, for example made from polyethylene (PE). The cardboard gives the package material sufficient stability to form packages that can be easily handled and stacked, for example. The plastic layers protect the cardboard from moisture and the products, especially food, from taking up undesirable substances from the package material. In addition, further layers, such as diffusion protection layers, if necessary an aluminum layer, can be provided to prevent the diffusion of oxygen and other gases through the package material.

In the known filling machines, package bodies are typically filled with products in the form of foodstuffs, in particular beverages, whereby flowable products are predominantly used. In particular, for reasons of shelf life, foodstuffs are filled into package bodies in a sterile or aseptic environment of the filling machine, which is also referred to as an aseptic zone or aseptic area. The package bodies are therefore sterilized in the filling machine, then filled and sealed under the most sterile conditions possible. If appropriate package materials are used, the package body is closed by sealing the open end to form a head or gable of the package.

The package bodies are preferably formed on the filling machine from package sleeves which are open at the opposite longitudinal ends and which have been produced from package material blanks, in particular by sealing the longitudinal edges of the package material blanks to one another. The package sleeves are folded flat and transferred as a stack to a magazine of the filling machine, where they are removed and unfolded and then, for example, placed on a mandrel of a so-called mandrel wheel, on which a bottom is folded and sealed at a longitudinal ends of the package sleeve. This results in a package body that is open on one side and which can be pulled off the mandrel wheel for feeding the package body into a sterilization zone of the filling machine. This is usually done by transferring the package bodies one after the other to the cells of a transport device comprising a cell chain that holds the package bodies. In the sterilization zone, the package bodies are preheated with hot sterile air and then sterilized, typically with hydrogen peroxide, and thereafter dried with sterile air. The sterile package bodies are transported by the transport device to the filling and sealing zone, where they are filled in a filling station and then sealed in a head sealing station to form a package, before the filled and sealed package is transported out of the filling and sealing zone by the transport device and then removed from the corresponding cells of the transport device.

Alternative filling machines are designed in a largely similary way. For example a filling machine is known in which a mandrel wheel and a transport device comprising a cell chain are dispensed with. Instead the package sleeves are transferred to a transport device comprising a traveling assembly, sterilized and thereafter sealed on the bottom side and filled.

As an alternative to a traveling assembly or a cell chain, filling machines are known in which the package bodies are picked up between parallel conveyor belts arranged in pairs and transported through the filling machine by the conveyor belts. The conveyor belts run endlessly around return pulleys, with the conveyor belts forming a transport section for transporting the package bodies in a transport direction and forming a return section for returning the conveyor belts in the return section in a direction opposite to the transport direction. The return section of the conveyor belts are not intended for transporting the package bodies. By returning the conveyor belts, the returned parts of the conveyor belts can pick up package bodies again after returning to the transport section. The transport sections and the return sections are arranged parallel to each other in order to save space.

As the transport devices of the filling machines are provided for transporting package sleeves, package bodies and packages in different sections of the transport device, the term "package elements" is sometimes used in the following as a general term covering package sleeves, package bodies and packages in order to avoid having to distinguish specifically between package sleeves, package bodies and packages in each case for the sake of clarity. Depending on the context, the term package element can therefore be used synonymously with package sleeve, package body and/or package.

Due to the fact that the conveyor belts circulate endlessly, the conveyor belts must be cleaned at least from time to time. This applies in particular if a product such as foodstuff is to be filled under sterile conditions. Cleaning can be very time-consuming and expensive if the downtimes of the filling machine due to belt cleaning should restricted.

Therefore, the object of the present invention is designing and further developing the filling machine and the method, each of the type mentioned at the beginning and described in more detail above, in such a way that a simplification of the method and design is achieved without having to accept functional limitations.

This object is solved in a filling machine according to the preamble of claim 1 in that a cleaning station for cleaning the conveyor belts with a cleaning fluid is assigned to the return section of the conveyor belts.

The said object is further solved according to claim 11 by a method for filling package bodies open on one side with products using a filling machine, preferably according to one of claims 1 to 10,
- in which the package bodies, which are open on one side, are held by at least one pair of conveyor belts of a transport device and are moved at least from a filling station to a head closure station,
- in which the conveyor belts are moved alternately between two pulleys along a transport section for transporting the package bodies and a return section for returning the conveyor belts,
- in which package bodies, which are open on one side, are filled with a product in the filling station,
- in which the head of the package bodies filled in the filling station is closed in the head closure station and
- in which the conveyor belts in the return section and/or in the transport section are cleaned with a cleaning fluid in a cleaning station.

By using a transport device with at least one pair of conveyor belts, at least the package bodies open on one side can be easily and reliably transported through the filling machine. Preferably, however, in addition to the package bodies, the transport device also transports package sleeves that are not yet sealed on the bottom side and/or packages that are sealed on both sides through the filling machine. The package sleeves and/or packages are then also held between the conveyor belts of a pair of conveyor belts and moved together with the conveyor belts in the transport direction of the corresponding transport device. Thereby, the conveyor belts come into contact with the package sleeves, package bodies and/or packages, i.e. the package elements.

The package elements are only held and guided between two pulleys of the conveyor belts of a pair of conveyor belts. Further pulleys may be provided, but two pulleys of each conveyor belt then form the transition area of the respective conveyor belts from the transport section to the return section and vice versa. As the conveyor belts pass through the filling station in the transport section, soiling of the conveyor belts with product to be filled can occur in particular in the filling station. However, other types of soiling are also conceivable as an alternative or in addition. In order to remove respective residues from the conveyor belts, the conveyor belts are passed through a cleaning station located either in the transport section and/or in the return section, where the conveyor belts are cleaned. For this purpose, the conveyor belts are washed with a cleaning fluid, which is preferably a liquid. It is also advisable for the cleaning fluid to contain a sterilizing agent, which may preferably be hydrogen peroxide. In this way, the conveyor belts can be sterilized. Particularly in the event that residues of the sterilizing agent remains on the conveyor belts after cleaning, contamination of the aseptic zone in the area of the filling station by the conveyor belts is reliably avoided.

The arrangement of the cleaning station in the area of the return sections of the conveyor belts is particularly space-saving and, in particular, does not lead to an unnecessary extension of the transport device and, thus, of the filling machine itself. It has also been shown that the transport device and thus the filling machine do not have to be made excessively wider, at least not excessively wider, by assigning the cleaning station to the return sections of the conveyor belts. However, in certain cases it might be also appropriate to incorporate the cleaning station next to the transport sections of the conveyor belts.

In a first particularly preferred filling machine, the cleaning station has at least one cleaning chamber through which at least one return section of a conveyor belt is guided. The cleaning chamber has at least one nozzle which is used to spray the at least one return section of at least one conveyor belt that is guided through the cleaning chamber with a liquid sterilizing agent. The cleaning chamber can be closed in such a way that the cleaning liquid does not accidentally reach other parts of the filling machine, but remains essentially in the cleaning chamber. More cleaning liquid can then be sprayed onto the conveyor belts at a higher speed. In the cleaning station some sort of cleaning takes place even though a main focus of the cleaning station could also be conditioning of the conveyor belts. In this context, conditioning could mean for example sterilizing the conveyor belts and/or applying sterile cleaning fluid on the conveyor belts which will adhere to the conveyor belts and, thus, can ensure, that the conveyor belts keep sterile when traveling other parts of the filling machine after leaving the cleaning station. Whether cleaning or conditioning is the main focus of the cleaning station may depend on the requirements of the individual case.

To prevent the cleaning liquid from being discharged uncontrolled from the at least one cleaning station with the conveyor belts and dripping undesirably onto other system parts of the filling machine, the cleaning station can have a drying chamber, through which the at least one transport section and/or the at least one return section of the at least one conveyor belt is guided. To dry the at least one conveyor belt while passing through the drying chamber, an air connection can be assigned to the drying chamber via which drying air can be supplied to dry the at least one return section of the at least one conveying belt. Since in many cases complete drying of the conveyor belts cannot be guaranteed, so that unintentionally some cleaning fluid can be left on the conveyor belts after leaving the drying chamber. Therefore, cleaning fluid containing a sterilization agent can be used to ensure that the remaining cleaning fluid, in particular water, is kept sterile. In this case for example cleaning fluid is at least removed from the conveyor belts to such an extent in the drying chamber that dripping of cleaning fluid from the conveyor belts leaving the cleaning station is avoided.

Irrespective of this, it is advisable for at least one return section to pass through a return channel. The conveyor belt cannot then contaminate any adjacent parts of the filling machine next to the return channel. The advantages of the return channel are particularly beneficial if the return channel is provided in the aseptic zone of the filling machine. The return channel can be connected to the cleaning station independently of this. Upstream of the cleaning station, the return channel can prevent adjacent parts of the filling machine from being contaminated by residues adhering on the conveyor belts. After the cleaning station, the return channel can prevent contaminated cleaning fluid from contaminating adjacent system parts of the filling machine.

In order to keep the equipment costs low and the filling machine compact, transport sections and/or return sections of two conveyor belts of two adjacent pairs of conveyor belts can be guided through at least one common cleaning chamber, at least one common drying chamber and/or at least one common return channel. However, in the absence of a further laterally adjacent pair of conveyor belts, the outer conveyor belts are preferably each guided individually through a separate cleaning chamber, a separate drying chamber and/or a separate return channel. In general, this results in a preferred number of cleaning chambers, drying chambers and/or return channels which is one greater than the number of pairs of conveyor belts (c = p + 1).

In order to also be able to clean the cleaning chamber and/or the drying chamber itself if they are soiled by the residues adhering to conveyor belts during cleaning of the conveying belts, a cleaning agent supply can be assigned to the cleaning chamber and/or the drying chamber. The cleaning agent supply can then be used to supply cleaning agent which cleans the cleaning chamber and/or the drying chamber. For this purpose, the cleaning agent supply can be assigned to at least one nozzle of the cleaning chamber and/or the drying chamber, via which the cleaning agent can be introduced into the cleaning chamber and/or the drying chamber. In order to reliably clean the cleaning chamber and/or the drying chamber it is preferred if the cleaning agent is a foam-forming cleaning agent, that forms foam cleaning the inner walls of the cleaning chamber and/or the drying chamber.

For precise, in particular step-by-step, transport of the package elements, it may be advisable to provide at least two pairs of conveyor belts arranged parallel to each other with transport cams for positioning and/or transporting the package elements. The package elements can rest against at least one transport cam of each conveyor belt in order to achieve exact positioning. This can be further improved if the package elements are in contact with two transport cams of each conveyor belt of the pair of conveyor belts. In this case, two transport cams are arranged in front of and two transport cams behind the respective package element. For example, the package elements can only be gripped and moved by the transport cams of the conveyor belts, but not necessarily also by the belt sections of the conveyor belts. However, if the belt sections of the conveyor belts also hold the package elements from both opposite sides, the package elements are held in place even better. The transport cams can then only serve to position the package elements.

As an alternative or in addition, at least two pairs of conveyor belts arranged parallel to one another can be provided in order to increase the number of package elements transported per unit of time. In order to also keep the conveyor belts of adjacent pairs of conveyor belts in position on the return section, in particular to prevent the conveyor belts from tilting in a direction towards the respective adjacent conveyor belt of the adjacent pair of conveyor belts, the return sections of two conveyor belts of adjacent pairs of conveyor belts can be aligned adjacent to one another in such a way that the free ends of at least some of the transport cams of the two conveyor belts are provided opposite to one another and at least substantially adjacent to one another. If one of the conveyor belts tends to tilt in the direction of the adjacent conveyor belt, this could only occur to a very small extent. Otherwise, the opposite transport cams of the adjacent conveyor belts would come into contact with each other and block any further tilting of one or both conveyor belts. It could be sufficient if only every second pair of transport cams in the return section is opposite each other and at most slightly spaced apart, or if a separate transport cam is always arranged between such pairs of transport cams in order to prevent the conveyor belts from tilting inwards. This depends on how many transport cams are assigned to a package element.

If the free ends of at least some of the transport cams are slanted in at least one direction towards the associated conveyor belt, they can dry easily in the return section if the transport cams are subjected to cleaning, for example. The transport cams are then accessible to drying air everywhere despite the small distance to the opposite transport cams of the adjacent conveyor belt. The inclination of the transport cams can be provided along a plane that intersects the associated conveyor belt at least substantially transversely to its longitudinal extension. The corresponding line of intersection between the plane of inclination and the conveyor belt can therefore be aligned vertically if required. As an alternative or in addition, however, the inclination can also be made in a plane that intersects the conveyor belt at least substantially in the longitudinal direction of the conveyor belt. The corresponding line of intersection between the plane of inclination and the conveyor belt can therefore be aligned horizontally if required. Instead of a inclination or in addition to this, at least some transport cams can be provided with a distance from the free end to the associated conveyor belt that is not constant over the entire length of the transport cam. The corresponding length of the transport cam can change over the extension of the transport cam transverse to the conveyor belt, i.e in the direction of the transport cam. For example, the transport cam can be longer further up than further down or have more than two sections of different lengths across the height of the transport cams.

The accessibility of the transport cams for drying air can also be ensured, for example, in such a way that the free ends of at least some of the transport cams are at least substantially wedge-shaped and/or have an at least substantially triangular cross-section. This prevents two opposite transport cams with relatively large, flat and parallel surfaces of the free ends from lying against each other, for example in the event that the transport cams are rectangular in shape. These surfaces would then only dry poorly if there was moisture between them.

However, one of two opposing transport cams can still be rectangular if the transport cam adjacent to the free end itself has a clearly differently shaped free end. A cuboid transport cam can be useful for positioning the package elements. Therefore, at least one transport cam of a conveyor belt adjacent to each package element can always have a cuboid shape. In other words, the conveyor belts of the at least one pair of conveyor belts can each have two transport cams for positioning and/or transporting a package element, wherein at least two, in particular at least three, of the four transport cams for positioning and/or transporting a package element are angled and/or formed transversely to the associated conveyor belt with a varying length.

As an alternative or in addition to rectangular transport cams, transport cams can also be provided with a contact surface for contact with a package element that is not aligned vertical, but is slightly inclined in relation to such a vertical plane, in particular in the transport direction and vice versa, respectively. This may allow the package elements to be held more reliably. The inclination of the contact surface relative to a plane perpendicular to the associated conveyor belt can be selected so that the lower end of the contact surface in the direction of gravity protrudes further in the direction of the package element to be held with the transport cam than the upper end of the contact surface. In this way, it is possible to prevent the package element from accidentally slipping downwards and thus no longer being aligned with the transport device in the desired manner. This risk is particularly high with packages, as they are filled and correspondingly heavy.

At least one transport cam of at least one conveyor belt of at least one pair of conveyor belts can also be designed to be detectable by a sensor of the filling machine. The sensor then detects when the at least one transport cam passes the sensor system to determine whether the conveyor belts are correctly aligned, are correctly positioned, moving at the correct speed or the like. It may therefore be expedient, if necessary, if a sensor system for detecting at least one transport cam is assigned to each pair of conveyor belts or even to each conveyor belt. It can be particularly simple if the at least one transport cam has at least one metal pin for this purpose, which, for example, can be detected by an inductive sensor system.

The overall advantages described above come into play to a particular extent if the transport device for transporting package elements is designed from a transfer station for transferring the package elements, in particular from above or from the front, via a bottom sealing station for forming and sealing the bottom of the package sleeves to the filling station. In this case, all these stations, which are then part of the filling machine, can be operated with one and the same transport device in order to carry out the corresponding working steps on the package elements transported by the transport device. The package element from the transfer station to the bottom sealing station can be a package sleeve, from which a package body is formed in the bottom sealing station by sealing the bottom.

As an alternative or in addition, for the same reason, it may be provided that the transport device is designed to transport package elements from the head closure station to a discharging station for discharging the package elements, in particular downwards or to the rear. The package element can be a package body, from which a package is formed in the head closure station, which is discharged by the transport device in the discharging station.

In order to be able to form an aseptic zone in the filling machine in which the package bodies are filled, a sterilization station can be provided with a hot air station for applying hot air to the package elements, a sterilization agent station connected downstream of the hot air station for applying sterilization agent to the package elements and a drying station connected downstream of the sterilization agent station for applying drying air to the package elements. For the sake of simplicity, it is advisable if the transport device is designed to transport the package elements through the sterilization station and, preferably, subsequently to the bottom sealing station. The package elements in the sterilization station can be a package body that is closed at one longitudinal end. However, with regard to sterilization, it can be particularly preferable if the package elements are a package sleeve that is open on both sides and through which the hot air, the sterilizing agent and/or the drying air can be passed. However, the hot air station is not essential and is therefore dispensable in certain cases.

Furthermore, the advantages of the filling machine are particularly well utilized if the package elements are formed at least essentially, if necessary in addition to a pouring element and a screw cap, from a package material in the form of a cardboard/plastic composite laminate, which can have further layers, for example in the form of an aluminium layer.

In a first particularly preferred embodiment of the process, the transport sections and/or the return sections of the conveyor belts are guided through at least one cleaning chamber and/or at least one drying chamber. In the cleaning chamber, the conveyor belts can then be sprayed with a cleaning fluid, in particular in the form of a liquid sterilizing agent, via nozzles. Alternatively or additionally, the conveyor belts can be dried with drying air in the at least one drying chamber. Neither the cleaning nor the drying process will then affect adjacent system parts of the filling machine, in particular they will not become contaminated.

Alternatively or additionally, the return sections of the conveyor belts can be guided through at least one return channel in order to prevent contamination of the conveyor belts from being transferred to adjacent parts of the filling machine. This can be particularly advantageous in an aseptic zone of the filling machine in order to keep the aseptic zone aseptic. Irrespective of this, it may be advisable for the at least one return channel to be adjacent to or connected to the cleaning station. Residues on the conveyor belts can then be prevented from being transferred to other adjacent parts of the filling machine upstream of the cleaning station and/or downstream of the cleaning station.

For the purposeful cleaning of the at least one cleaning chamber and/or the at least one drying chamber, a foam-forming cleaning agent can be injected into the cleaning chamber and/or drying chamber through at least one nozzle. The cleaning agent then forms a foam in the cleaning chamber and/or drying chamber, which reaches the walls of the cleaning chamber and/or drying chamber and cleans the walls of the cleaning chamber and/or drying chamber. In a simple filling machine, the at least one nozzle can be a nozzle that is also used in the cleaning chamber for spraying the cleaning fluid, in particular in the form of a sterilizing agent, for the purpose of cleaning the at least one conveyor belt. Therefore, no separate nozzle is required to introduce the cleaning agent into the cleaning chamber. However, such a separate nozzle could still be provided and used for the sake of simplicity. With regard to the drying chamber, however, it may be preferable if at least one nozzle is provided in the drying chamber for cleaning the drying chamber, via which foam-forming cleaning agent can be supplied intermittently when the drying chamber is to be cleaned. If this is not the case during normal operation of the filling machine, this nozzle can be without function.

For the purpose of easy cleaning of the drying chamber, the foam-forming cleaning agent and/or the foam can also be fed from the cleaning chamber into the drying chamber by the at least one conveyor belt, if necessary. The foam can then be distributed in the drying chamber and clean the walls of the drying chamber. It may then be possible to dispense with injecting the cleaning agent into the drying chamber using a separate nozzle. However, it will regularly be less preferable if the foam is also discharged from the drying chamber with the conveyor belt. To avoid this, the foam in the drying chamber can be rinsed off the at least one conveyor belt and/or the walls of the drying chamber with a rinsing liquid. To ensure this, it may be appropriate for the at least one conveyor belt to be sprayed with the rinsing liquid via at least one nozzle in the drying chamber, which for the sake of simplicity is the same nozzle with which the foam-forming cleaning agent can be sprayed into the drying chamber beforehand. Alternatively or additionally, in the case of a simple filling machine, it may be useful if rinsing liquid can also be sprayed intermittently via a nozzle of the cleaning chamber which is also used for spraying the cleaning fluid and/or for spraying the foam-forming cleaning agent. The rinsing fluid is sprayed into the cleaning chamber in order to wash the foam off the at least one conveyor belt and/or the walls of the cleaning chamber. In order to be able to dispense with the nozzle in the drying chamber or in order to be able to more easily clean the conveyor belts in the drying chamber, an aerosol can be sprayed onto the conveyor belts in the drying chamber. In this case the aerosol can for example be supplied to the drying chamber through at least one nozzle of the drying chamber, which can be the same nozzle that is also used for supplying air to the belts in order to blow of cleaning fluid from the belt at times where the cleaning device is not cleaned itself.

The cleaning chamber and/or the drying chamber can be cleaned as required in a separate cleaning cycle or in any case during a period in which no package bodies are being filled. The cleaning of the cleaning chamber and/or the drying chamber therefore does not affect the filling of products into package bodies. However, in order to reduce downtimes, the conveyor belts can also be cleaned at certain intervals during the actual operation of the filling machine, i.e. during the filling of product into package bodies. This is particularly possible if it is ensured that not only the package bodies have been sterilized before filling, but also the conveyor belts for transporting the package bodies through the filling station.

The waste water produced during cleaning of the conveyor belts with the cleaning fluid and/or during cleaning of the cleaning chamber with the foam-forming cleaning agent and the rinsing fluid and/or during cleaning of the drying chamber with foam-forming cleaning agent and the rinsing fluid is, in particular, discharged from the cleaning chamber and may thereafter preferably be cleaned and reused. The waste water can first be cleaned using a filter for grease and a filter for discharging very small particles. Subsequently or independently of this, a sterilizing agent such as hydrogen peroxide (HzOz) can be added to the purified water and/or to the water circuit in order to ensure the sterility of the cleaning fluid. For this purpose, the hydrogen peroxide contend in the recycled water can be measured continuously and the addition of hydrogen peroxide can be controlled accordingly.

In the following, the invention is explained in more detail with reference to a drawing showing only embodiments. The drawing shows
- Fig. 1A-E: different states of a package element during the production of a package starting from a blank of package material,
- Fig. 2: a schematic side view of a filling machine according to the invention,
- Fig. 3: a sequence of individual steps or stations in the process for producing a filled, sealed package,
- Fig. 4: the transport device of the filling machine of Fig. 2 in a schematic plan view from above,
- Fig. 5A-B: a detail of the transport device of the filling machine of Fig. 4 in a plan view from above and in a sectional view along the sectional plane VB-VB of Fig. 5A,
- Fig. 6A-C: a detail of the transport device of the filling machine of Fig. 4 in a plan view from above and in sectional views along the sectional planes VIB-VIB and VIC-VIC of Fig. 6A and
- Fig. 7A-D: the cleaning station of the filling machine of Fig. 2 in different sectional views along sectional planes VIIA-VIIA, VIIB-VIIB, VIIC-VIIC and VIID-VIID of Fig. 7B-C.

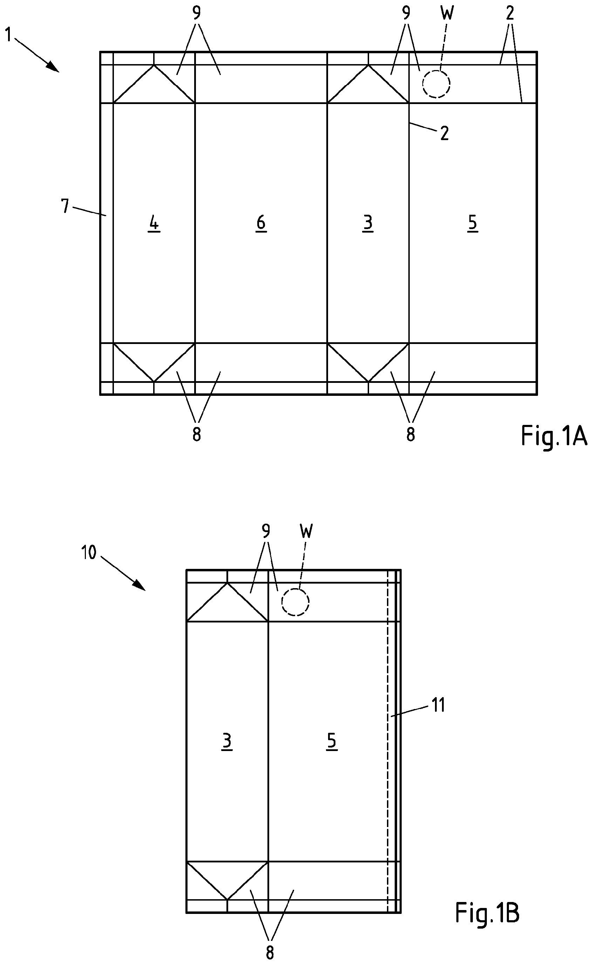

Fig. 1A shows a blank 1 of a package material known from the prior art, from which a package sleeve can be formed. The blank 1 can comprise several layers of different materials, for example paper, cardboard, plastic or metal, in particular aluminum. The blank 1 has several folding lines 2, which are intended to facilitate folding of the blank 1 and divide the blank 1 into several surfaces. The blank 1 can be divided into a first side surface 3, a second side surface 4, a front surface 5, a rear surface 6, a sealing surface 7, bottom surfaces 8 and head surfaces 9 which can also be addressed as gable surfaces. A package sleeve 10 can be formed from the blank 1 by sealing the sealing surface 7 with the front surface 5, which is shown in the flat folded state in Fig. 1B by overlapping area 11. A round weakening line W is shown in a dashed line in the area where a pouring element is to be sealed on.

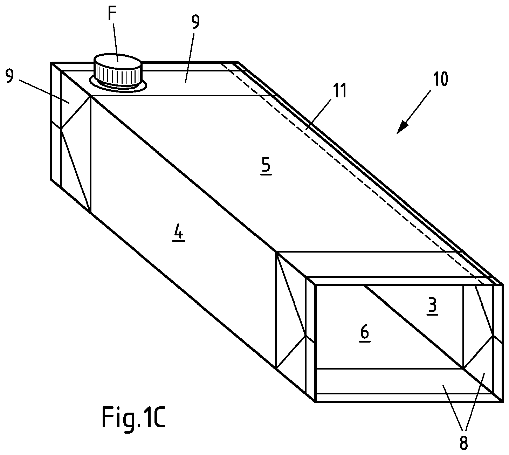

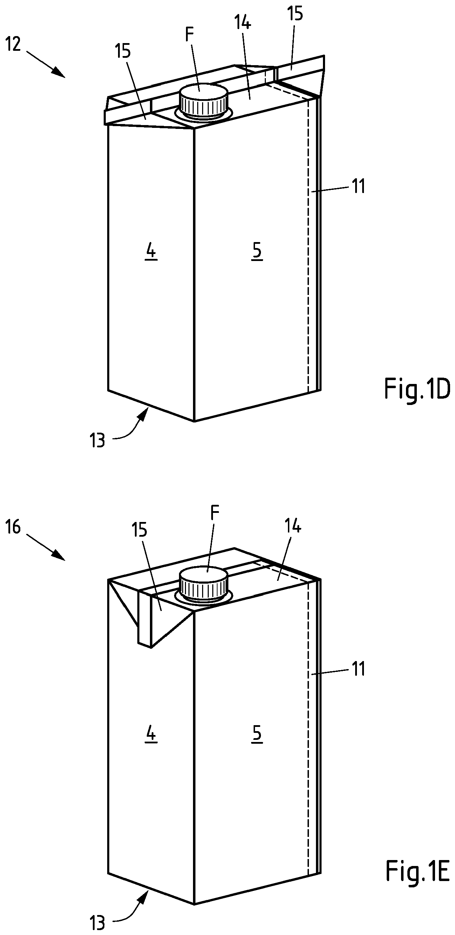

In Fig. 1C the package sleeve 10 from Fig. 1B is shown in a partially unfolded state and provided with a pouring element F carrying a screw cap. The pouring element is ultrasonically welded to the package material. Figs. 1D shows a package body 12 formed from the package sleeve 10 of Fig. 1C in the filled state during sealing of the head surfaces 9. The bottom 13 of the package sleeve 10 has been sealed before in the area of the bottom surfaces 8 to form the package body 12 which can be filled from above. Thereafter the head 14 of the package body 12 is sealed in the area of the head surfaces 9. The ears 15 formed by sealing the head surfaces 9 are then sealed or glued to the side surfaces 3,4 and package 16 shown in Fig. 1E is obtained.

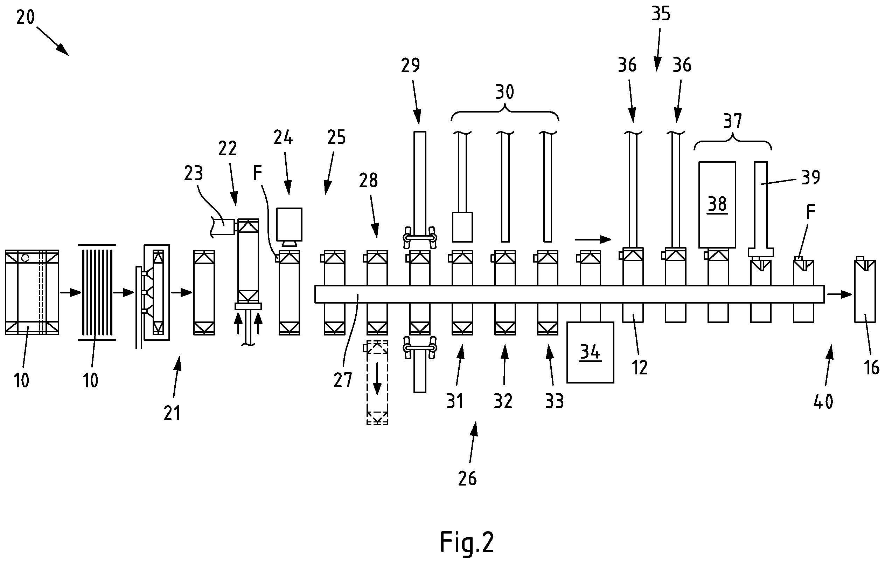

Fig. 2 shows a filling machine 20. Package sleeves 10 are taken of a stack 21 of package sleeves 10 and slightly unfolded. Thereafter the package sleeves 10 are transferred from to an unfolding station 21 of the filling machine 20. However, the package sleeves 10 could also be unfolded beforehand so that no unfolding station 21 is required. The package sleeves 10 are then lifted in an applicator station 22, provided with a pouring element F by means of an ultrasonic sealing unit 23 known per se and lowered again. In the next, optional, position, an optical sensor system 24 checks the package sleeve 10 provided with the pouring element F for possible defects. The package sleeve 10 is then taken over in a transfer station 25 by a transport device 26 between a pair of conveyor belts 27. If required, an ejection station 28 can also be provided for ejecting package sleeves 10 that have not been correctly transferred. Subsequently a pre-folding station 29 is provided, in which both the head 14 and the bottom 13 of the carton sleeves 10 are pre-folded. The package sleeves 10 are then sterilized in the sterilization station 30. In the embodiment example shown, the sterilization station 30 has three sub stations, namely a hot air station 31 for preheating the package sleeves 10 that are still open at the bottom, a sterilizing agent station 32 for sterilizing the package sleeves by injecting a sterilizing agent and a drying station 33 for drying the sterilized package sleeves. However, the hot air station 31 is not necessary in any case. Thereafter, the bottom sealing takes place in the bottom sealing station 34, whereby the ears formed thereby are sealed from below onto the closed bottom 13 of the package bodies 12 formed by the bottom sealing station 34. After filling the package body 12 in a subsequent filling station 35, which can take place in two subsequent steps in two filling units 36 in the present case, the now filled package body 12 passes through the head closure station 37 for forming and sealing the head 14 of the package 16, which can also be regarded as the gable of the package 16. First in a head seam station 38 the head seam is sealed. Second the therely formed ears 15 are then sealed to the side surfaces 3,4 in the ear seam station 39, resulting in the finished package 16, which is discharged at the end of the transport device 26 via a discharging station 40, in particular in a horizontal direction.

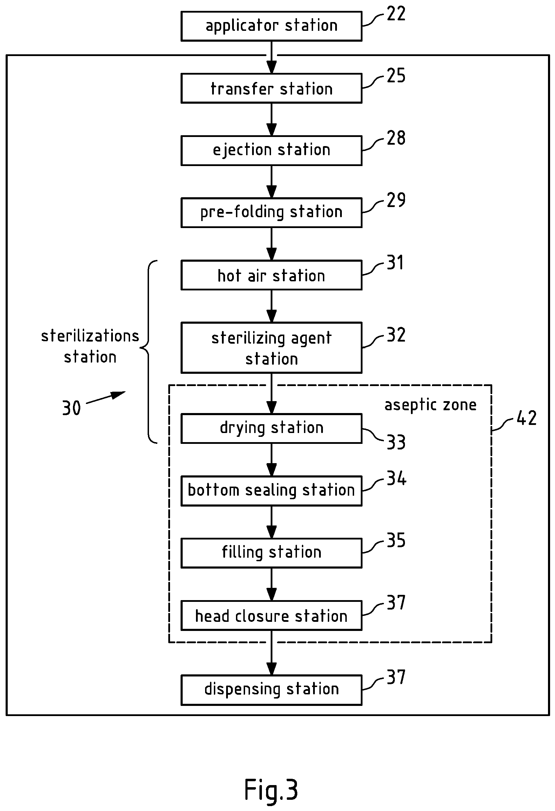

As shown in Fig. 3 the working steps from the drying of the package sleeves 10 to the closing of the head 14 or top of the package bodies 12 take place in an aseptic zone 42.

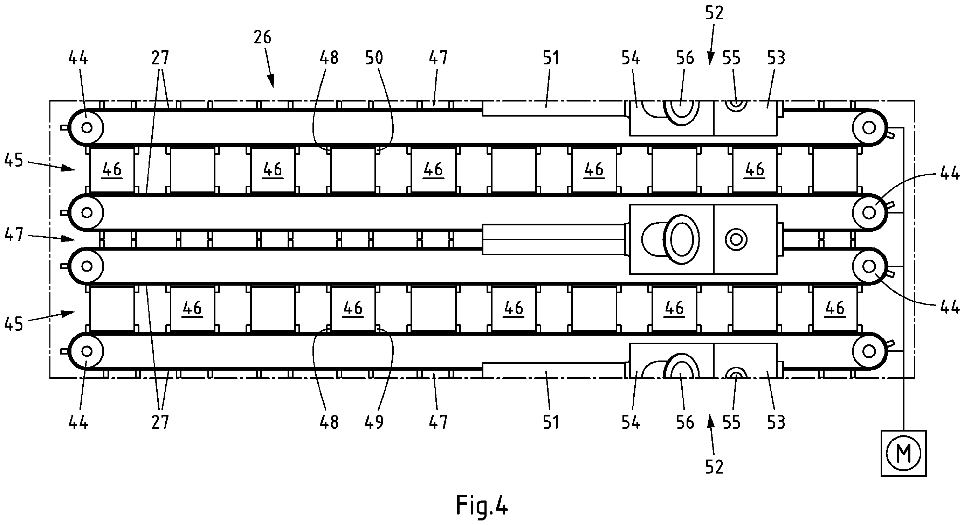

Fig. 4 shows a schematic view of the transport device 26. The transport device 26 comprises several, specifically six, pairs of conveyor belts 27 that are deflected via return pulleys 44 and circulate endlessly. Between the pulleys 44, the conveyor belts 27 form a transport section 45 on one side for transporting package elements 46 and a return section 47 on the other side for returning the conveyor belts 27 after having passed through the transport section 45. The package elements 46 are package sleeves 10 in a front area of the transport device 26, package bodies 12 in a middle area of the transport device 26 and packages 16 in a rear area of the transport device 26. The package elements 46 are fed at one end of the transport device 26 and discharged at the opposite end of the transport device 26. During transport of the package elements 46, the package elements 46 are held between the conveyor belts 27 of the pairs of conveyor belts 27, specifically between four transport cams 48,49,50, of which two transport cams 48 are provided in front of the package elements 46 and two transport cams 49,50 behind the respective package element 46. The transport cams 48,49,50 each engage with the associated package element 46. In the area of the return sections 47 of the conveyor belts 27, these are provided adjacent to a conveyor belt 27 of the adjacent pair of conveyor belts 27, with exception of the outer conveyor belts of the filling machine 20. The transport cams 48,49,50 of the conveyor belts 27 which are adjacent to each other in the return sections 47 of the conveyor belts 27 are arranged directly opposite to each other and either touch each other or almost touch each other.

In the return sections 47, the conveyor belts 27 run through return channels 51 and a cleaning station 52 connected to the return channel 51. The cleaning station 52 comprises cleaning chambers 53 and drying chambers 54, whereby a supply 55 for liquid sterilizing agent is assigned to the cleaning chambers 53 and an air connection 56 for supplying drying air is assigned to the drying chambers 54. In a central area of the transport device 26, return sections 47 of two conveyor belts 27 pass through a common return channel 51, a common cleaning chamber 53 and a common drying chamber 54. At the outer edges of the transport device 26, the outer conveyor belt 27 alone is guided through a return channel 51, a cleaning chamber 53 and a drying chamber 54 in the respective return section 47.

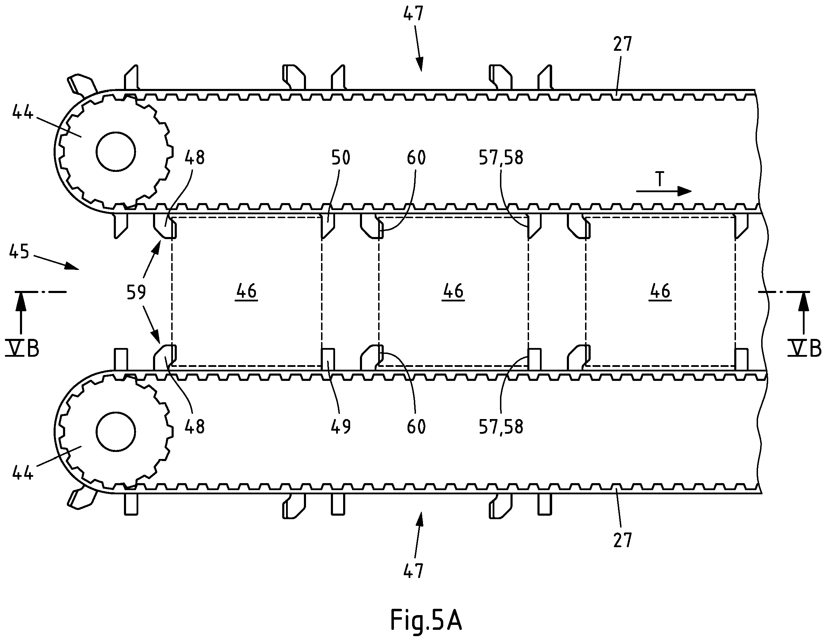

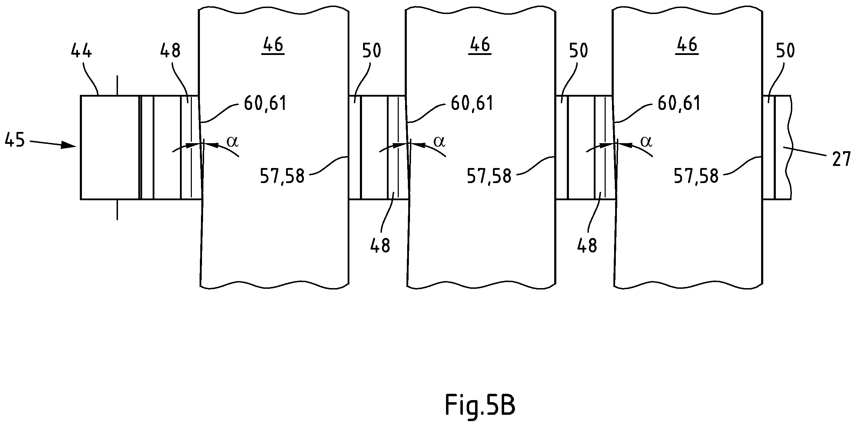

Figs. 5A-B show a detail of the transport device 26 next to a pair of conveyor belts 27. The package elements 46 held between the transport sections 45 of the conveyor belts 27 and between four transport cams 48,49,50 of the conveyor belts 27 are illustrated with dashed lines. The transport cams 49,50 provided directly behind the package elements 46 in the transport direction T are of different shapes. In the view from above, one transport cam 49 has a cuboid cross-section, while the opposite transport cam 50 has a triangular cross-section at the free end. The two transport cams 49,50 arranged behind the package elements 46 in the transport direction T each have a contact surface 57 on the package elements 46 that is essentially perpendicular to the transport direction T and to the conveyor belts 27. These contact surfaces 57 of the transport cams 49,50 rest against parallel contact surfaces 58 of the package elements 46.

The transport cams 48 provided directly in front of the package elements 46 in the transport direction T are beveled on the side of the free end facing away from the respective package element 46. On the sides of these transport cams 48 opposite the beveled sections 59, the transport cams 48 form contact surfaces 60 for contact with package elements 46, which protrude further towards the package elements 46 at the lower end than at the upper end. The contact surface 60 is aligned in a plane perpendicular to the conveyor belts 27 and inclined by the angle α to the transport direction T. These contact surfaces 60 are in contact with corresponding contact surfaces 61 of the package elements 46 that are aligned perpendicular to the transport direction T and perpendicular to the conveyor belts 27, whereby the package elements 46 are slightly compressed in the area of the contact surfaces 60,61 so that the contact surfaces 60 of the transport cams 48 and the contact surfaces 61 of the package elements 46 are then aligned at least essentially parallel to each other. The inclination of the contact surfaces 60 of certain transport cams 48 therefore prevents the package elements 46 from inadvertently slipping downwards.

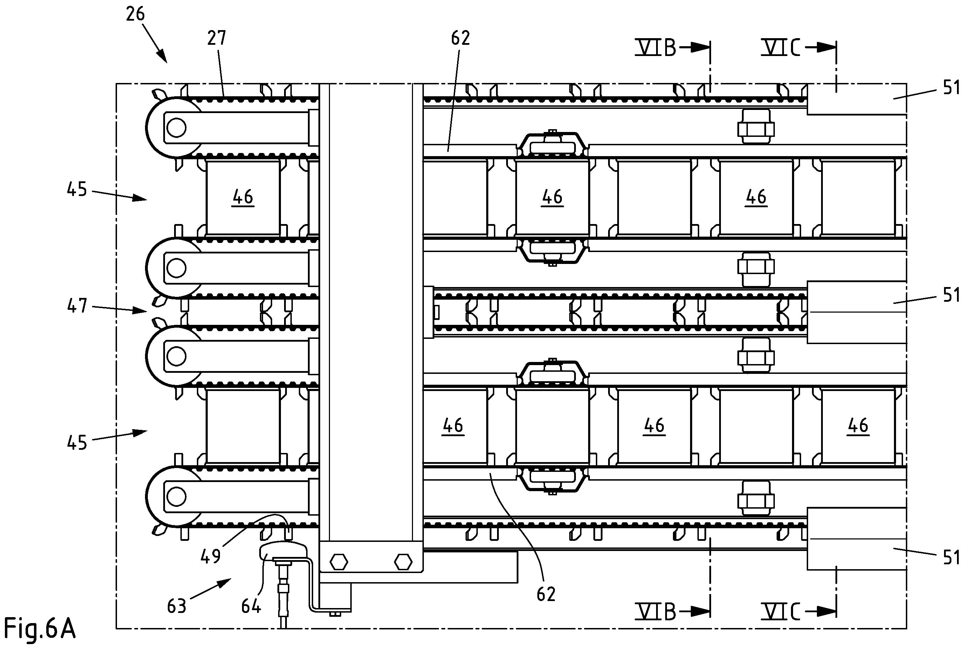

Figs. 6A-C also show a detail of the transport device 26 in a front area of the transport device 26. In Fig. 6A the transport device 26 is shown in a view from above. Package elements 46 are located between the transport sections 45 of the conveyor belts 27, whereby the transport sections 45 of the conveyor belts 27 are held and guided in sections in guides 62. If necessary, areas without guides 62 are also provided along the transport sections 45. Furthermore, the transport cams 48,49,50 of the conveyor belts 27 in the return sections 47 are arranged opposite to transport cams 48,49,50 of conveyor belts 27 of an adjacent pair of conveyor belts 27. The opposite transport cams 48,49,50 are directly adjacent to each other and form only a small gap between them when the transport cams 48,49,50 do not rest against each other with their free ends and are thus supported against each other. The middle conveyor belts 27 can be guided in pairs in the return channel 51 over at least parts of the return sections 47. The return sections 47 of the outer conveyor belts 27 are also guided in a return channel 51, but individually in each case. A sensor system 63 is assigned to an outer return section 47 of a conveyor belt 27, which detects the transport cams 49 transported past the sensor 64 and thus detects the position or alignment of the conveyor belts 27. For this purpose, the transport cam 49 can include at least one metal pin, for example. The sensor system 63 can then be an inductive sensor 64.

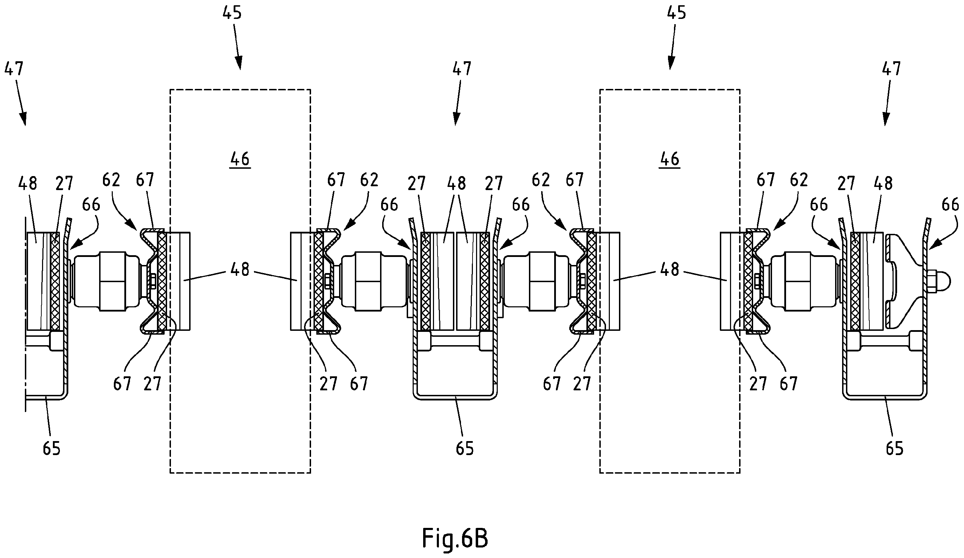

Fig. 6B shows the transport device 26 in a section perpendicular to the conveyor belts 27. The transport sections 45 and the return sections 47 of the conveyor belts run parallel to each other and at the same height. The transport cams 48 shown, which are preferred in this respect, extend over at least essentially the entire width, i.e. essentially the entire height, of the conveyor belts 27. In the area of the return sections 47, the lower edge of the conveyor belts 27 rests on the guide 65 of the conveyor belts 27 in the return section 47, which is approximately U-shaped in the area shown. In the return section 47, the backs of the conveyor belts 27 rest more or less on essentially vertically aligned, flat sections 66 of the guides 65. The guides 62 of the conveyor belts 27 in the transport sections 45 are approximately C-shaped and engage with the outer legs 67 both over and under the conveyor belts 27, whereby the edges of the conveyor belts 27 can rest more or less against the legs 67 of the guides 62.

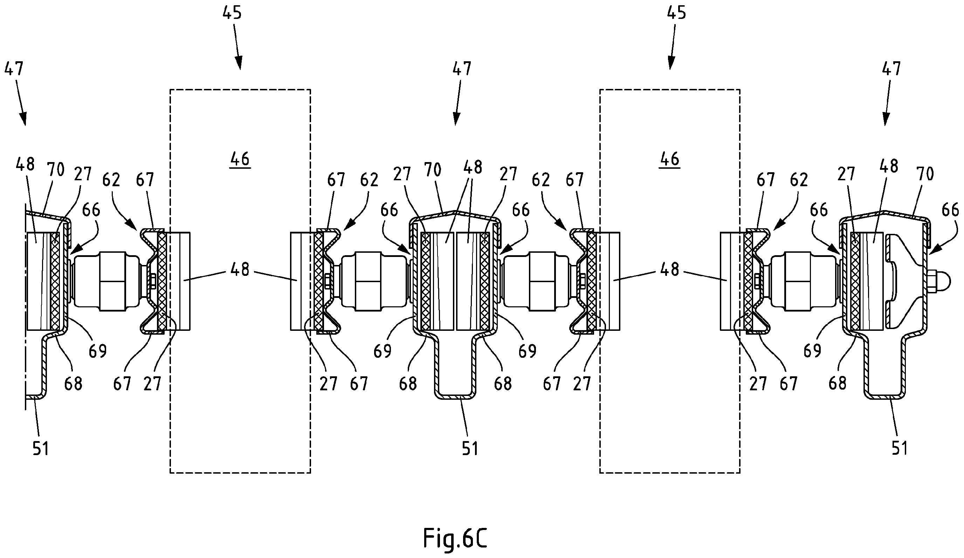

In Fig. 6C the transport device 26 is shown at a point where the conveyor belts 27 are guided in the return sections 47 in a return channel 51. The return channel 51 is provided with supports 68 for the lower edges of the conveyor belts 27 and at least vertical side walls 69 for contact with the rear sides of the conveyor belts 27. The return channel 51 is closed at the top by a cover 70. The return channel 51 is provided in particular in the aseptic zone 42 in order to prevent contamination of the aseptic zone 42 by the conveyor belts 27 traveling in the return section 47.

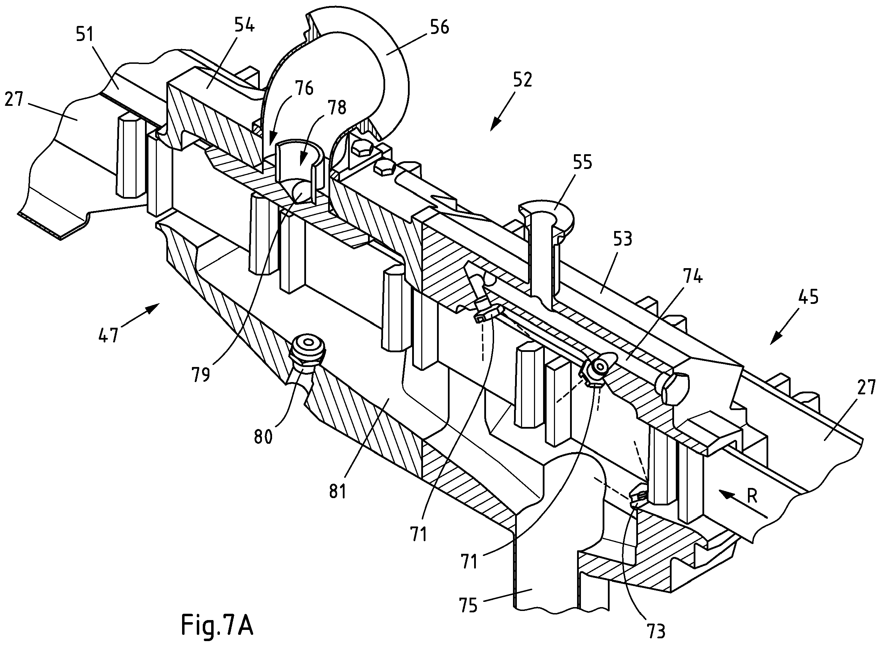

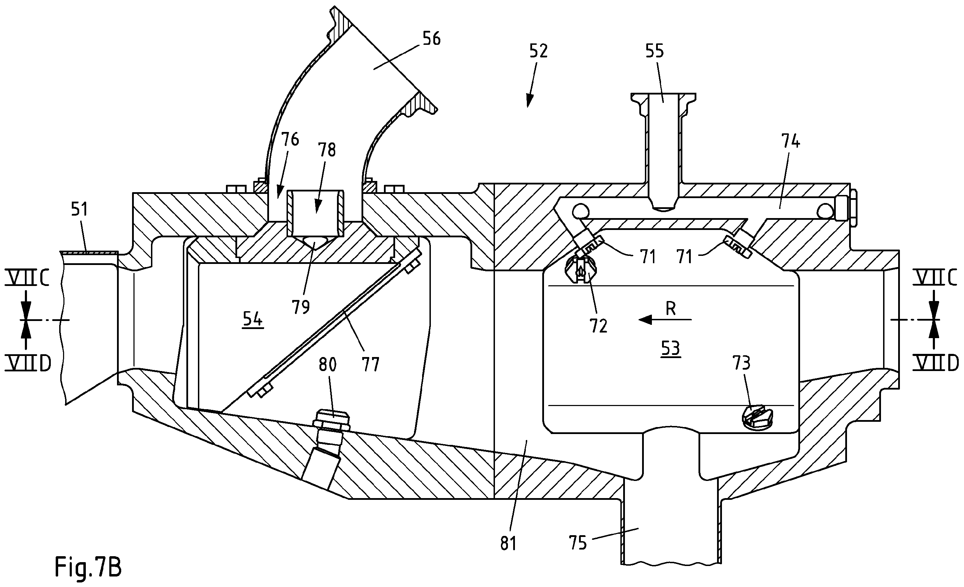

Figs. 7A-D show a detail of the cleaning station 52 of the filling machine 20 in a central area of the transport device 26, in which two conveyor belts 27 of adjacent pairs of conveyor belts 27 are traveling through a common cleaning chamber 53, a common drying chamber 54 and a common return channel 51. The return sections 47 of the adjacent conveyor belts 27 of adjacent pairs of conveyor belts 27 are cleaned together. In the perspective sectional view of Fig. 7A, only one conveyor belt 27 of the two conveyor belts 27 of adjacent pairs of conveyor belts 27 is shown, while in Figs. 7B-D, both conveyor belts 27 have been omitted on purpose for the sake of clarity.

The conveyor belts 27 first enter a cleaning chamber 53 in the return direction R and are sprayed from all sides with a liquid sterilizing agent via nozzles 71,72,73. The liquid sterilization agent is fed into the cleaning chamber 53 via a respective supply 55. From there, the sterilizing agent is fed via lines 74 to the nozzles 71,72,73 of the cleaning chamber 53. A total of six nozzles 71,72,73 are provided in the cleaning chamber 53 shown and preferred in this respect. These nozzles 71,72,73 are flat nozzles that generate a flat but wide jet of sterilizing agent in order to reach all surfaces of the conveyor belts 27 and to remove the contaminants from the conveyor belts 27, in particular mechanically.

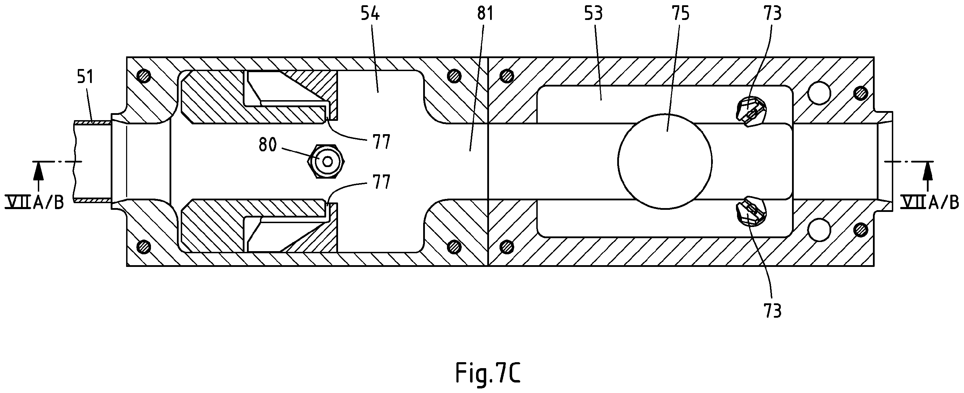

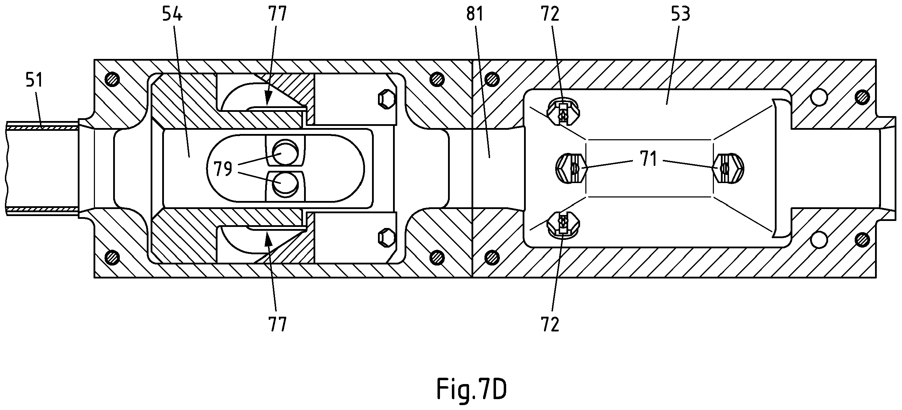

In each case, two nozzles 71 are arranged above the gap between the conveyor belts 27. These two nozzles 71 spray sterilizing agent into the gap between the conveyor belts 27 and every one of these two nozzles 71 is inclined towards the other by approximately 45° relative to a vertical plane, with their nozzle slot aligned approximately perpendicular to the conveyor belts 27. In addition, two further nozzles 73 are provided below the conveyor belts 27 and on opposite sides of the conveyor belts 27, of which only one nozzle 73 is shown in Figs. 7A-B. The respective nozzle 73 shown in Fig. 7C is located opposite the nozzle 73 shown in Figs. 7A-B, in relation to a plane defined by the gap between the conveyor belts 27. In the present case, the nozzles 73 are arranged approximately mirror-symmetrically to a vertical plane through the gap of the conveyor belts 27, as shown in Fig. 7C, which is a horizontal sectional view from above. These two lower nozzles 73 arranged at the front of the cleaning chamber 53 in the return direction R are inclined upwards and inwards in the direction of the conveyor belts 27, with their nozzle slot rotated by approximately 45° relative to the plane defined by the gap of the conveyor belts 27. In Fig. 7D a horizontal sectional view is shown from below, including two additional nozzles 72 at the rear end of the cleaning chamber 53 in the return direction R. These nozzles 72 are inclined downwards and inwards in the direction of the conveyor belts 27, whereby the nozzle slots of the nozzles 72 are aligned approximately perpendicular to the plane defined by the gap of the conveyor belts 27.

Spraying the conveyor belts 27 with sterile cleaning agent not only sterilizes the conveyor belts 27 and/or ensures that the cleaning fluid remaining on the conveyor belts is sterile. It also mechanically removes contamination from the conveyor belts 27 that preferably had not yet had enough time to dry and is therefore not yet firmly attached to the conveyor belts 27. However, the cleaning is not restricted to residues that can easily be washed away. The cleaning fluid can drip off the conveyor belts 27 together with the loosened contaminants and run off via an outlet 75 on the floor of the cleaning chamber 53. In this respect it is to note that the main focus of the preferred cleaning station 52 shown is cleaning the conveyor belts 27. Sterilizing the conveyor belts 27 might not be necessary. However, cleaning fluid which remains on the conveyor belts 27 after leaving the cleaning station 52 might advantageously be sterile in order to avoid contamination of the conveyor belts 27 after cleaning the cleaning station 52. However, this is not necessarily the case. As an alternative a sterilization agent could be dispensed with, or conditioning could be more important than actual cleaning of the conveyor belts 27 in the cleaning station 52.

The conveyor belts 27 cleaned in the cleaning chamber 53 enter directly after exiting the cleaning chamber 53 a subsequently provided drying chamber 54, which is supplied with drying air via an air connection 56 provided above the drying chamber 54. Some of the drying air is directed via an outer ring area 76 in the supply line for air to the opposite sides of the conveyor belts 27, where it exits via slotted nozzles 77 and dries the opposite rear sides of the conveyor belts 27. The rest of the drying air is fed via a central pipe section 78 to two central nozzles 79, which are provided above the gap of the conveyor belts 27 and which are each directed at an angle towards the front of one the conveyor belts 27. Sterilizing agent should still adhere to the conveyor belts after leaving the drying chamber 54 in order to keep the conveyor belts 27 sterile on their further journey through the filling machine 20.

From time to time, a foam-forming cleaning agent can also be fed into the cleaning chamber 53 via the nozzles 71,72,73 which at other times serve for feeding sterilization agent onto the conveyor belts 27 in the cleaning chamber 53. The foam-forming cleaning agent forms a foam after being sprayed into the cleaning chamber 53, so that the foam more or less fills the cleaning chamber 53 and cleans the inner walls of the cleaning chamber 53. In addition, foam-forming cleaning agent can be fed into the drying chamber 54 via a nozzle 80 located at the bottom of the drying chamber 54. The foam formed in this way more or less fills the drying chamber 54 and thus cleans the inner walls of the drying chamber 54. The foam in the cleaning chamber 53 is rinsed from the cleaning chamber 53 and the conveyor belts 27 after a certain time by injecting a rinsing liquid into the cleaning chamber 53 via the nozzles 71,72,73 which also serve for spraying the sterilizing agent and for spraying the foam-forming cleaning agent into the cleaning chamber 53. The foam is removed from the drying chamber 54 by spraying a rinsing liquid into the drying chamber 54 via the nozzle 80 for supplying the foam-forming cleaning agent to the drying chamber 54. The corresponding nozzle 80 is a hollow cone nozzle. However, other types of nozzles would be possible as well. The rinsing liquid can run out of the drying chamber 54 via a channel 81 into the cleaning chamber 53, where it drains out via the outlet 75 together with the cleaning chamber drainage liquid.

## Claims

1. Filling machine (20) for filling package bodies (12) open on one side with products, the filling machine (20) having a filling station (35) for filling the package bodies (12) open on one side, a head closure station (37) for closing the head of the filled package bodies (12) open on one side and a transport device (26) for transporting at least the package bodies (12) open on one side at least from the filling station (35) to the head closure station (37) through the filling machine (20), wherein the transport device (26) has at least one pair of conveyor belts (27) for holding the package bodies (12) on opposite side walls and for moving the package bodies (12) in a transport direction (T), wherein the conveyor belts (27) have, between at least two pulleys (44) for deflecting the conveyor belts (27), an at least substantially straight transport section (45) for transporting the package bodies (12) and an at least substantially straight return section (47) for returning the conveyor belts (27) aligned at least substantially parallel to the transport section (45),
**characterized in that**
a cleaning station (52) for cleaning the conveyor belts (27) with a cleaning fluid is assigned to the transport section (45) and/or the return section (47) of the conveyor belts (27).

2. Filling machine according to claim 1,
**characterized in that**
the cleaning station (52) has a cleaning chamber (53) and at least one conveyor belt (27) in the transport section (45) and/or the return section (47) is guided through the cleaning chamber (53) and that at least one nozzle (71,72,73) for spraying the at least one conveyor belt (27) in the transport section (45) and/or the return section (47) with a liquid sterilizing agent in the cleaning chamber (53) is assigned to the cleaning chamber (53).

3. Filling machine according to claim 1 or 2,
**characterized in that**
the cleaning station (52) has a drying chamber (54) and at least one conveyor belt (27) in the transport section (45) and/or the return section (47) is guided through the drying chamber (54) and that the drying chamber (54) is assigned an air connection (56) for drying the at least one conveyor belt (27) in the transport section (45) and/or the return section (47) with drying air.

4. Filling machine according to one of claims 1 to 3,
**characterized in that**
at least one conveyor belt (27) with its return section (47) is guided through a return channel, in particular connected to the cleaning station (52), and that, preferably, the return channel (51) is provided in an aseptic zone (42) of the filling machine (20).

5. Filling machine according to one of claims 2 to 4,
**characterized in that**
return sections (47) of two conveyor belts (27) of two adjacent pairs of conveyor belts (27) are guided through at least one cleaning chamber (53) and/or at least one drying chamber (54) and/or at least one return channel (51) and that, preferably, the number of cleaning chambers (53) and/or drying chambers (54) and/or return channels (51) is greater by one than the number of pairs of conveyor belts (27).

6. Filling machine according to one of claims 2 to 5,
**characterized in that**
a cleaning agent supply (55), in particular for supplying a foam-forming cleaning agent, for cleaning the cleaning chamber (53) and/or the drying chamber is assigned to the cleaning chamber and/or the drying chamber and that, preferably, the cleaning agent supply (55) is assigned to at least one nozzle (71,72,73,80) of the cleaning chamber (53) and/or the drying chamber (54) for discharging the cleaning agent into the cleaning chamber (53) and/or the drying chamber (54).

7. Filling machine according to one of claims 1 to 6,
**characterized in that**
at least two pairs of conveyor belts (27) arranged parallel to one another are provided with transport cams (48,49,50) for positioning and/or transporting the package bodies (12), and **in that** the return sections (47) of two conveyor belts (27) of adjacent pairs of conveyor belts (27) are aligned adjacent to one another in such a way that the free ends of at least some of the transport cams (48,49,50) of the two conveyor belts (27) are provided opposite one another and at least substantially adjacent to one another.

8. Filling machine according to claim 7,
**characterized in that**
the free ends of at least some of the transport cams (48,50) are beveled in at least one direction at an angle to the associated conveyor belt (27) and/or have a varying distance from the associated conveyor belt (27) in a direction transverse to the associated conveyor belt (27) in a direction perpendicular to the associated conveyor belt (27).

9. Filling machine according to claim 8,
**characterized in that**
the free ends of the at least some transport cams (48,50) have an at least substantially wedge-shaped cross-section and/or an at least substantially triangular cross-section and/or **in that** at least individual transport cams (49) project at the lower end in the direction of gravity relative to the upper end in the direction of the package body (12) to be held by the transport cams (48,49,50).

10. Filling machine according to one of claims 1 to 9,
**characterized in that**
the transport device (26) for transporting package elements (10,12,16) is designed to move from a transfer station (25) for transferring the package sleeves (10) via a bottom sealing station (34) for forming and sealing the bottom (13) of the package sleeve (10) to the filling station (35) and/or **in that** the transport device (26) for transporting the sealed packages (16) is designed to move from the head closure station (37) to a discharge station (40) for discharging the packages (16) and/or **in that** the transport device (26) for transporting package sleeve (10) is designed to move through a sterilization station (30) with a hot air station (31) for applying hot air to the package sleeves (10), a sterilization agent station (32) connected downstream of the hot air station (31) for applying sterilization agent to the package sleeves (10) and a drying station (33) connected downstream of the sterilization agent station (32) for applying drying air to the package sleeves (10).

11. Method for filling package bodies (12) open on one side with products using a filling machine (20), preferably according to one of claims 1 to 10,
- in which the package bodies (12), which are open on one side, are held by at least one pair of conveyor belts (27) of a transport device (26) and are moved at least from a filling station (35) to a head closure station (37),
- in which the conveyor belts (27) are moved alternately between two pulleys (44) along a transport section (45) for transporting the package bodies (12) and a return section (47) for returning the conveyor belts (27),
- in which the package bodies (12), which are open on one side, are filled with a product in the filling station (35),
- in which the head (14) of the package bodies (12) filled in the filling station (35) is closed in the head closure station (37) and
- in which the conveyor belts (27) preferably in the return section (47) are cleaned with a cleaning fluid in a cleaning station (52).

12. Method according to claim 11,
- in which the return sections (47) of the conveyor belts (27) are guided through at least one cleaning chamber (53) and/or at least one drying chamber (54), and
- in which the return sections (47) of the conveyor belts (27) are sprayed with a cleaning fluid, in particular in the form of a liquid sterilizing agent, via nozzles (71,72,73) in the at least one cleaning chamber (53) and/or are dried with drying air in the at least one drying chamber (54).

13. Method according to claim 11 or 12,
- in which the return sections (47) of the conveyor belts (27), in particular in an aseptic zone (42) of the filling machine (20), are guided through at least one return channel (51), preferably adjacent to the cleaning station (52).

14. The method according to any one of claims 11 to 13,
- in which a foam-forming cleaning agent is injected into the cleaning chamber (53) through at least one nozzle (71,72,73) , if necessary also used for spraying the cleaning fluid, and and/or into the drying chamber (54) through at least one nozzle (80)
- in which the foam-forming cleaning agent cleans the cleaning chamber (53) and/or the drying chamber (54).

15. Method according to claim 14,
- in which the foam-forming cleaning agent and/or the corresponding foam in the cleaning chamber (53) and/or in the drying chamber (54) is rinsed off the at least one conveyor belt (27) and/or the walls of the cleaning chamber (53) and/or drying chamber (54) with rinsing liquid, and
- in which, preferably, the rinsing liquid is supplied to the cleaning chamber (53) via at least one nozzle (71,72,73), in particular also provided for supplying cleaning fluid and/or foam-forming cleaning agent, and/or is supplied to the drying chamber (54) via at least one nozzle (80), in particular also provided for supplying foam-forming cleaning agent.
